# EUROPÄISCHE PATENTSCHRIFT

(11) **EP 0 923 853 B1**
(45) Veröffentlichungstag und Bekanntmachung des Hinweises auf die Patenterteilung: **09.01.2002**
(21) Anmeldenummer: 99200307.9
(22) Anmeldetag: 05.02.1999
(51) Int. Cl.: A01F 29/00

(54) **Vorrichtung und Verfahren zum Auflockern eines Blocks komprimierten losen Materials, insbesondere Blumenerde**
Apparatus and method for shredding a block of compacted material,specialy flower mould
Appareil et méthode de désagrégation d'un bloc de matériau comprimé spécialement terre de plantation

(30) Priorität: 06.02.1998 NL 1008238
(43) Veröffentlichungstag der Anmeldung: 23.06.1999
(73) Patentinhaber: Logitec Plus B.V., 2908 LT Capelle a/d IJssel (NL)
(72) Erfinder: De Baat, Marius Cornelis, 2901 KD Capelle a/d Ijssel (NL)
(74) Vertreter: Ferguson, Alexander

(56) Entgegenhaltungen:
- WO-A-94/03043
- FR-A- 2 371 868
- US-A- 4 923 128

## Beschreibung

Die Erfindung bezieht sich auf eine Vorrichtung gemäß dem Oberbegriff des Anspruchs 1. Die Erfindung bezieht sich weiter auf ein Verfahren gemäß dem Oberbegriff des Anspruches 11.

Eine solche Vorrichtung und ein solches Verfahren sind aus AT-gm-001805 bekannt.

Unter "loses Material" wird hier ein Material verstanden, das normalerweise eine unzusammenhängende Struktur aufweist, aber zugleich wegen dieser Struktur zu einem zusammenhängenden Ganzen komprimiert werden kann. Beispiele dafür sind Blumenerde, Torf, Papier, Silofutter, Stroh und Baumwolle.

Das lose Material wird zu Blöcken komprimiert, damit die Kosten für das Verpacken, Transportieren und Verarbeiten reduziert werden. Um einen Block komprimierten losen Materials verarbeiten zu können, zum Beispiel im Falle von Blumenerde mit Hilfe einer Maschine, die Blumentöpfe mit Blumenerde füllt, muß der Block so aufgelockert werden, daß die zusammenhängende Struktur wieder aufgebrochen wird. Dabei ist wichtig, daß entweder eine feine Struktur, oder (nahezu) die ursprüngliche Struktur wieder erreicht wird, wobei genügend Luft innerhalb des Materials vorhanden sein muß und Klumpen vermieden werden müssen.

Aufgabe der Erfindung ist es, eine Vorrichtung bzw. ein Verfahren zum Auflockern eines Blocks komprimierten losen Materials zu schaffen, die bzw. das den obengenannten Ansprüchen entspricht. Dazu weist die Vorrichtung gemäß der Erfindung das Merkmal auf, daß die Schabemittel in einem den Block tragenden Wandteil angeordnet sind.

Auf diese Weise wird das Eigengewicht des Blocks vorteilhaft genutzt, dadurch daß die Kraft, die der Block auf die Schabemittel ausübt, eine gute Schabearbeit sicherstellt und dadurch daß der Block beim Abschaben von selbst nach unten sackt und so immer in Berührung mit den Schabemitteln bleibt.

Vorzugsweise sind die Schabemittel beweglich in einer Richtung entlang dem oder in dem den Block tragenden Wandteil. Dabei können die Schabemittel zugleich eine Transportfunktion erfüllen. Das aufgelockerte Material kann dabei zu einer Seite gebracht werden, um dort zur Weiterverarbeitung aufgefangen zu werden.

Um die Vorrichtung gut auf eine das lose Material verarbeitende Maschine, wie eine Topfauffüllmaschine, anschließen lassen zu können, ist das den Block tragende Wandteil vorzugsweise hinsichtlich des Unterbodens in einem Winkel anstellbar oder angestellt. Durch die schräge Aufstellung hat die Vorrichtung eine beschränkte Höhe und/oder Breite, abhängig von der Form des Blocks. Darüber hinaus kann damit der Druck des Blocks auf die Schabemittel beschränkt gehalten werden, wodurch die Ausführung der Schabemittel einfacher gehalten werden kann. Eine im Behälter - am oberen Rand des Wandteils, wo sich die Schabemittel befinden - angeordnete Auslaßöffnung befindet sich vorzugsweise dann mindestens auf gleicher Ebene mit der Einlaßöffnung einer Verarbeitungsmaschine. Das abgeschabte Material ist dann durch die Schabemittel auch auf eine effiziente Förderhöhe gebracht.

Falls eine feste Winkelaufstellung des den Block tragenden Wandteils benutzt wird, kann ein anderes den Block tragende Wandteil, das an das die Schabemittel umfassende Wandteil anschließt, sich um ein Scharnier drehen zwischen einer Empfangsposition und einer Stützposition. Auf diese Weise kann der Block sehr einfach in die Vorrichtung gebracht und gekippt werden, so wie unten beschrieben.

Vorzugsweise werden die Schabemittel durch ein endloses Band oder eine endlose Kette gebildet, worauf die Schabeelemente befestigt sind. Für eine gute Schabefunktion sind die Schabeelemente vorzugsweise L-förmige Leisten.

Vorzugsweise umfäßt das den Block tragende Wandteil Mittel um das abgeschabte Material abwärts zurückzuhalten, wie zum Beispiel eine direkt unter den Schabemitteln angeordnete Platte. Im Falle von verschiebbaren Schabeelementen wird das abgeschabte Material dann durch die Schabeelemente über die Platte zur Auslaßöffnung geschoben oder gebracht.

In der Auslaßöffnung können Aufwühlmittel vorgesehen sein, um das abgeschabte Material nochmals zusätzlich aufzulockern, damit es genügend Luft in dem Material gibt, Bruchstücke feingemacht werden und das ursprüngliche Volumen wieder erhalten wird.

Bemerkt wird, daß aus der Internationalen Patentanmeldung WO 94/03043 eine Vorrichtung zum Verkleinern von in Rollenform zusammengepreßtem Heu oder Stroh bekannt ist, wobei die Rolle auf einem trapezförmigen Boden getragen wird, worin eine Anzahl von Leisten, auf einer endlosen angetriebenen Kette befestigt, aufgenommen sind, um den Heu- oder Strohballen abzurollen und das Ende davon zu einer separaten Verkleinerungsvorrichtung, wo die Halme zerstückelt werden, aufwärts zuzuführen.

Aus dem amerikanischen Patentschrift US 4.923.128 ist eine Vorrichtung zum Verkleinern eines Ballens, zum Beispiel eines Strohballen, bekannt. Die Vorrichtung umfäßt ein den Ballen unterstützendes Wandteil und eine an der Seite davon angeordnete Rolle mit einer Reihe von Zähnen, mit denen die aufrechtstehende Seite des Ballens aufgezogen wird. Der Ballen wird mittels einer umlaufenden Reihe mittels von Ketten angetriebenen Eckprofilen zur Seite der Rolle gedrückt.

Von einem anderen Gesichtspunkt aus verschafft die Erfindung ein Verfahren zum Auflockern eines Blocks komprimierten Materials, wie Blumenerde, wobei der Block mit einer Fläche auf eine Unterstützung mit darin angebrachten Schabemitteln gestellt wird, und mit Hilfe der Schabemittel an der unterstützten Fläche Material des Blocks abgeschabt wird.

Vorzugsweise wird das abgeschabte Material durch die Schabemittel zu einer Abgabestelle mitgenommen.

Vorzugsweise wird der Block schräg aufgestellt, wobei ebenfalls bevorzugt wird, daß die Schaberichtung aufwärts ist, zu einer obengelegenen Abgabestelle.

Die Erfindung wird nachfolgend anhand der beiliegenden Figuren näher erläutert. Die Figuren zeigen:
Figur 1 zeigt eine perspektivische Ansicht einer Ausführungsform der Vorrichtung gemäß der Erfindung, ab der Einfuhrseite eines Blocks komprimierten Materials,
Figur 2 zeigt eine perspektivische Ansicht der Ausführungsform der Vorrichtung gemäß Figur 1, ab der Ausfuhrseite der abgeschabten Blumenerde, und
Figur 3 zeigt eine perspektivische Ansicht einer anderen Ausführungsform der Vorrichtung gemäß der Erfindung.

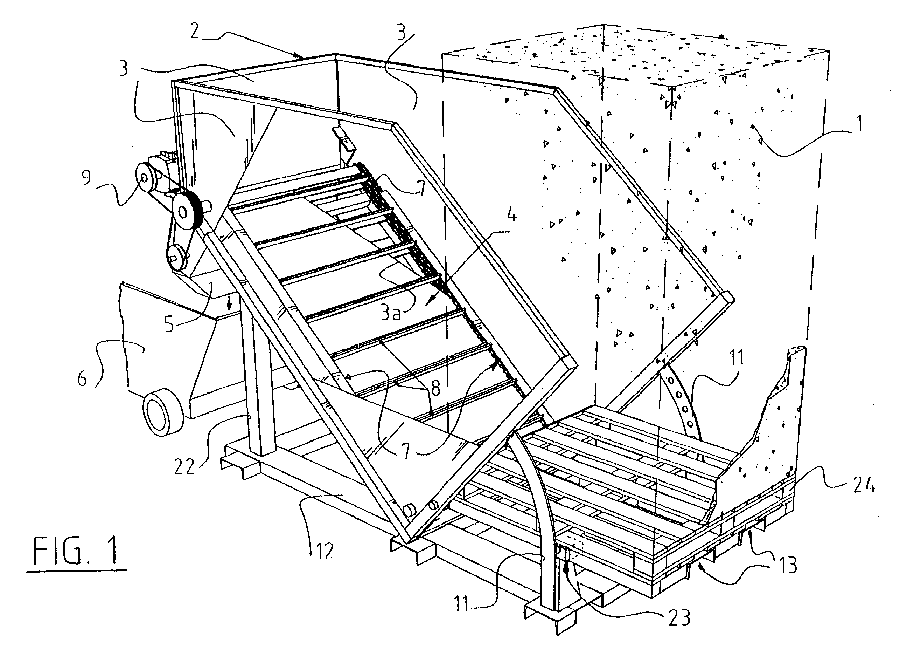

Figur 1 zeigt eine erste Ausführungsform einer Vorrichtung zum Auflockern eines Blocks komprimierter Blumenerde 1 gemäß der Erfindung. Die Vorrichtung umfäßt einen Behälter 2 mit Wandteilen 3, 3a, 3b zum Aufnehmen eines Blocks komprimierter Blumenerde 1, damit zusammenarbeitende Schabemittel 4 und eine an dem Behälter 2 vorgesehene Auslaßöffnung 5. Die Schabemittel 4 sind in einem die Blumenerde 1 unterstützenden Wandteil 3a angeordnet worden. Das die Blumenerde unterstützende Wandteil 3a ist hinsichtlich des Aufstellbodens in einem Winkel angestellt. Dadurch befindet sich die Auslaßöffnung 5 auf einer bestimmten Höhe, so daß die Vorrichtung mit einer allgemein bekannten Topfauffüllmaschine 6, oder einer anderen Verarbeitungsvorrichtung, einem Fließband oder dergleichen gekoppelt werden kann.

Die Schabemittel 4 werden aus zwei Ketten 7, worauf Schabeelemente 8 befestigt sind, gebildet, die an den Längsseiten des die Blumenerde unterstützenden Wandteils 3a angeordnet sind. Zum Antreiben der Ketten sind Antriebsmittel 9, insbesondere ein Motor mit einem Riemenantrieb, vorgesehen. Die Schabeelemente 8 bestehen aus L-förmigen Leisten, die entlang dem die Blumenerde unterstützenden Wandteil 3a, insbesondere über eine direkt unterhalb der Schabeelemente angeordnete Platte, in Richtung der Auslaßöffnung 5 bewegt werden.

Ein anderes die Blumenerde 1 unterstützendes Wandteil 3b, das an das die Schabemittel 4 enthaltende Wandteil 3a anschließt, kann sich um Scharnier 10 drehen. Zwei gekrümmte Führungen 11 sind angeordnet worden, um das Wandteil 3b während der Drehung zu führen. Ferner ist zwischen diesen Führungen 11 und dem Wandteil 3b ein Rastmechanismus 23 vorgesehen. Der Rastmechanismus 23 ist derart ausgeführt, daß das Wandteil 3b ohne Hemmnis nach unten geschwenkt werden kann, aber beim nach oben Schwenken in die entgegengesetzte Richtung blockiert wird.

Die Vorrichtung wurde in ihrem Ganzen auf einen Stützrahmen 12 gestellt. Der Rahmen 12 wird gebildet durch kanalförmige Profile zum Durchlassen der Gabeln eines Gabelstaplers und zwei Ständer 22 zum Unterstützen des höheren Teils der Vorrichtung. In dem Wandteil 3a, die sich um Scharniere drehen kann, sind zwei kanalförmige Aussparungen 13, ebenfalls zum Durchlassen der Gabel eines Gabelstaplers, vorgesehen.

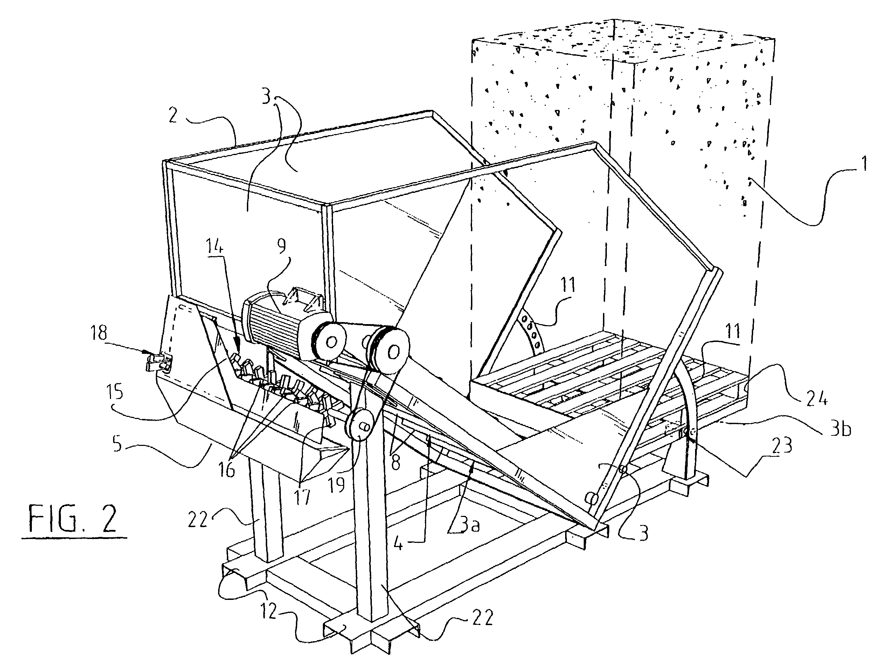

Figur 2 zeigt die Ausführungsform der Figur 1 aus der Richtung der Auslaßöffnung 5 gesehen. In der Auslaßöffnung 5 sind Aufwühlmittel 14 anordnet worden. Die Aufwühlmittel 14 werden gebildet durch stationäre, auf einer kippbaren Platte 15 angeordnete Stifte 16, die mit rotierenden Sternen 17 zusammenwirken. Die kippbare Platte 15 kann mit Hilfe der Verstellmittel 18 verstellt werden, wobei die Stifte 16 in der Richtung der Sterne 17 auf einer Rotationsachse 19 angeordnet worden sind, die ebenfalls durch die Antriebsmittel 9 angetrieben wird.

Die Vorrichtung wird auf folgende Weise benutzt. Zuerst wird das Wandteil 3b nach unten geschwenkt, wonach mit Hilfe eines Gabelstaplers der auf eine Palette 24 gestellte Block komprimierter Blumenerde 1 auf das Wandteil 3b gestellt wird. Danach werden die Gabeln des Gabelstaplers in die kanalförmigen Aussparungen 13 des Wandteils 3b gesteckt, um das Wandteil 3b mit dem sich darauf stützenden Block komprimierter Blumenerde 1 in den Behälter 2 zu kippen. Die Antriebmittel 9 werden eingeschaltet und das Auflockern beginnt. Die L-förmigen Leisten 8 werden durch die Ketten 7 über das Wandteil 3a bewegt, wobei die Leisten 8 Blumenerde der auf dem Wandteil 3a liegenden Seite des Blocks komprimierter Blumenerde 1 abschaben und die abgeschabte Blumenerde gleichzeitig zur Auslaßöffnung 5 transportieren. Die in der Auslaßöffnung 5 angeordneten Aufwühlmittel 14 lockern die Blumenerde nochmals zusätzlich auf, woraufhin die Blumenerde weiter verarbeitet werden kann, zum Beispiel in der Topfauffüllmaschine 6. Beim Abschaben wird der Block komprimierter Pfanzenerde 1 durch das eigene Gewicht nach unten sacken und wird so immer in Berührung mit den Schabemitteln 4 sein. Darüber hinaus wird durch das Eigengewicht des Blocks 1 eine Kraft auf die Schabemittel 4 ausgeübt werden, wodurch eine gute Schabearbeit gewährleistet ist.

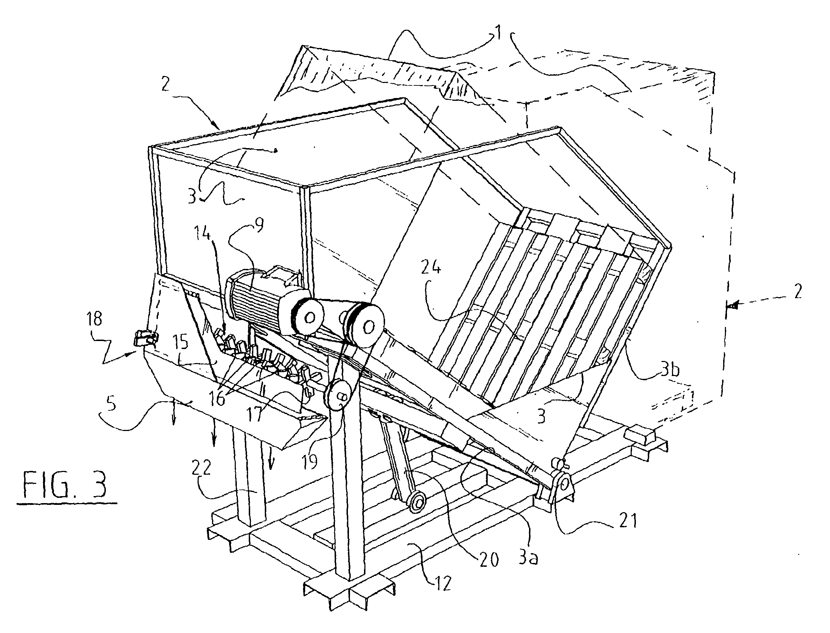

In Figur 3 wird eine andere Ausführungsform der Vorrichtung gemäß der Erfindung gezeigt. Das die Blumenerde 1 unterstützende Wandteil 3a ist in diesem Fall hinsichtlich des Unterbodens in einem Winkel verstellbar. Das Anwinkeln der Wand 3a, und im Grunde des gesamten Behälters 2, wird mit Hilfe eines Zylinders 20 vorgenommen, der zwischen dem Stützrahmen 12 und dem Behälter 2 angeordnet ist. Der Behälter 2 ist zwecks Winkelverstellbarkeit auf eine um eine Scharnierachse 21 drehbare Weise auf dem Stützrahmen 12 angeordnet.

Hierbei kann die Palette unter dem Block verbleiben, so daß der Block während des Transports an sich nicht übermäßig angefasst werden braucht, wie es bisher der Fall war, durch der Block gerade oberhalb der Palette auf den Gabel zu "stechen".

Zum Auflockern eines Blocks komprimierter Blumenerde 1 wird der Behälter mit Hilfe des Zylinders 20 gerade, das heißt in die mit unterbrochenen Linien angegebene Position, gestellt. Der Block komprimierter Blumenerde 1 wird mit Hilfe eines Gabelstaplers auf das Wandteil 3b in den Behälter gesetzt. Danach wird mit Hilfe des Zylinders 20 den Behälter 2 wieder in den Schrägstand, mit den durchgezogenen Linien angegeben, gestellt. Die Vorrichtung ist jetzt fertig, um mit dem Auflockern eines Blocks komprimierter Erde 1 zu beginnen.

Obwohl die Vorrichtung in Bezug auf Blumenerde beschrieben wurde, ist die Erfindung nicht darauf beschränkt.

## Patentansprüche

1. Vorrichtung zum Auflockern eines Blocks (1) komprimierten losen Materials, wie z.B. Blumenerde, wobei die Vorrichtung einen Behälter (2) mit Wandteilen (3, 3a, 3b) zum Aufnehmen des Blocks (1), damit zusammenarbeitende Schabemittel (4) und eine Auslaßöffnung (5), umfaßt, **dadurch gekennzeichnet, daß** die Schabemittel (4) in einem den Block (1) tragenden Wandteil (3a) angeordnet sind.

2. Vorrichtung nach Anspruch 1, **dadurch gekennzeichnet, daß** die Schabemittel (4) in einer Richtung entlang dem oder in dem den Block (1) tragenden Wandteil (3a) beweglich sind.

3. Vorrichtung gemäß Anspruch 1 oder 2, **dadurch gekennzeichnet, daß** das den Block (1) tragende Wandteil hinsichtlich des Aufstellbodens in einem Winkel geneigt ist.

4. Vorrichtung gemäß Anspruch 2, **dadurch gekennzeichnet, daß** das den Block (1) tragende Wandteil (3a) am oberen Rand die Auslaßöffnung (5) aufweist.

5. Vorrichtung gemäß einem der vorangehenden Ansprüche, **dadurch gekennzeichnet,** daß der Behälter (2) kippbar aufgestellt ist, zum Kippen aus einer senkrechten Empfangsposition in eine Schabeposition, vorzugsweise in eine schräge Schabeposition.

6. Vorrichtung gemäß einem der vorangehenden Ansprüche, **dadurch gekennzeichnet,** daß ein anderes den Block (1) tragendes Wandteil (3b), das an das die Schabemittel (4) umfassende Wandteil (3a) anschließt, scharnierbar ist.

7. Vorrichtung gemäß einem der vorangehenden Ansprüche, **dadurch gekennzeichnet,** daß die Schabemittel (4) durch ein endloses Band oder eine endlose Kette, an dem bzw. der Schabeelemente (8) befestigt sind, gebildet werden, wobei die Schabeelemente (8) vorzugsweise im Querschnitt L-förmige Leisten sind.

8. Vorrichtung gemäß einem der vorangehenden Ansprüche, **dadurch gekennzeichnet,** daß das den Block (1) tragende Wandteil (3a) Mittel zum abwärts zurückhalten des abgeschabten Materials umfäßt, wie zum Beispiel eine direkt unter den Schabeelementen (8) angeordnete Platte.

9. Vorrichtung gemäß Anspruch 2 und 8, **dadurch gekennzeichnet, daß** die Schabemittel (4) derart angeordnet sind, daß sie sich gerade oberhalb der Mittel vom abwärts Zurückhalten des abgeschabten Materials bewegen.

10. Vorrichtung gemäß einem der vorangegangenen Ansprüche, **dadurch gekennzeichnet, daß** in der Auslaßöffnung (5) Auflockerungsmittel vorgesehen sind.

11. Verfahren zum Auflockern eines Blocks (1) komprimierten Materials. wie Blumenerde, wobei der Block (1) mit einer Fläche auf eine Stützfläche gestellt wird und mittels Schabemitteln (4) Material von dem Block (1) entfernt wird, **dadurch gekennzeichnet,** daß der Block (1) auf die in der Stützfläche befindlichen Schabemittel (4) gestellt wird und mit Hilfe der Schabemittel (4) an dieser Unterstützungsfläche des Blocks (1) Material abgeschabt wird.

12. Verfahren gemäß Anspruch 11, **dadurch gekennzeichnet, daß** das abgeschabte Material durch die Schabemittel (4) entlang der Fläche zu einer Abgabestelle mitgenommen wird.

13. Verfahren gemäß Anspruch 11 oder 12, **dadurch gekennzeichnet, daß** der Block (1) schräg gestellt wird, bevor er abgeschabt wird.

14. Verfahren gemäß Anspruch 11 oder 12, **dadurch gekennzeichnet, daß** der Block (1) aufrecht stehend auf einer Palette (24) herangefahren wird, der Block (1) mit der Palette (24) auf eine ja oder nicht offene Wand (3b) der Unterstützung des Blocks (1) gestellt wird, die Wand (3b) gekippt wird, um den Block (1) mit einer Seitenfläche (3a) auf eine Fläche (3a) zu legen, in der die Schabemittel (4) tätig sind.

15. Verfahren gemäß Anspruch 14, **dadurch gekennzeichnet, daß** die Schaberichtung aufwärts, zu einer obengelegenen Abgabestelle, gerichtet ist.

## Claims

1. Apparatus for loosening a block (1) of compressed loose material, such as potting compost, the apparatus comprising a container (2) with wall parts (3, 3a, 3b) to accomodate the block (1), scraping means (4) cooperating therewith and an outlet opening (5), **characterized in that** the scraping means (4) are arranged in a wall part (3a) that carries the block (1).

2. Apparatus according to claim 1, **characterized in that** the scraping means (4) can be moved in a direction along or in the wall part (3a) that carries the block (1).

3. Apparatus according to claim 1 or 2, **characterized in that** the wall part that carries the block (1) is arranged at an angle with respect to the erection base.

4. Apparatus according to claim 2, **characterized in that** the wall part (3a) that carries the block (1) has the outlet opening (5) at the upper edge.

5. Apparatus according to one of the preceding claims, **characterized in that** the container (2) is erected such that it can be tilted, for the purpose of being tilted from a vertical receiving position into a scraping position, preferably into an oblique scraping position.

6. Apparatus according to one of the preceding claims, **characterized in that** another wall part (3b) that carries the block (1) and adjoins the wall part (3a) that comprises the scraping means (4) can be hinged.

7. Apparatus according to one of the preceding claims, **characterized in that** the scraping means (4) are formed by an endless belt or an endless chain, to which scraping elements (8) are fixed, the scraping elements (8) preferably being bars with an L-shaped cross section.

8. Apparatus according to one of the preceding claims, **characterized in that** the wall part (3a) that carries the block (1) comprises means for the downward retention of the scraped-off material, such as a plate arranged directly under the scraping elements (8).

9. Apparatus according to claim 2 and 8, **characterized in that** the scraping means (4) are arranged in such a way that they move just above the means for the downward retention of the scraped-off material.

10. Apparatus according to one of the preceding claims, **characterized in that** loosening means are provided in the outlet opening (5).

11. Method of loosening a block (1) of compressed material, such as potting compost, the block (1) being placed with one face on a supporting surface, and material being removed from the block (1) by means of scraping means (4), **characterized in that** the block (1) is placed on the scraping means (4) located in the supporting surface and, with the aid of the scraping means (4), material is scraped off this supporting face of the block (1).

12. Method according to claim 11, **characterized in that** the scraped-off material is carried along the surface by the scraping means (4) to a discharge point.

13. Method according to claim 11 or 12, **characterized in that** the block (1) is placed in an oblique position before it is scraped off.

14. Method according to claim 11 or 12, **characterized in that** the block (1) is brought up standing upright on a pallet (24), the block (1) with the pallet is placed on a wall (3b), which may be open or not, belonging to the support of the block (1), the wall (3b) is tilted, in order to place the block (1) with one side face (3a) on a surface (3a) in which the scraping means act.

15. Method according to claim 14, **characterized in that** the scraping direction is oriented upwards, towards a discharge point located at the top.

## Revendications

1. Dispositif pour ameublir un bloc (1) d'un matériau lâche comprimé, comme par exemple du terreau pour fleurs, le dispositif comprenant un récipient (2) avec des parties de parois (3, 3a, 3b) pour recevoir le bloc (1), des moyens de raclage (4) coopérant avec ces parties de parois, et une ouverture de sortie (5), **caractérisé en ce que** les moyens de raclage (4) sont agencés dans une partie de paroi (3a) portant le bloc (1).

2. Dispositif selon la revendication 1, **caractérisé en ce que** les moyens de raclage (4) sont déplaçables dans une direction le long de la partie de paroi (3a) portant le bloc (1), ou dans cette partie de paroi.

3. Dispositif selon l'une ou l'autre des revendications 1 ou 2, **caractérisé en ce que** la partie de paroi portant le bloc (1) est agencée sous un angle par rapport au sol sur lequel elle est posée.

4. Dispositif selon la revendication 2, **caractérisé en ce que** la partie de paroi (3a) portant le bloc (1) comporte l'ouverture de sortie (5) à la bordure supérieure.

5. Dispositif selon l'une des revendications précédentes, **caractérisé en ce que** le récipient (2) est posé avec faculté de basculement, afin de basculer autour d'une position de réception verticale jusque dans une position de raclage, de préférence dans une position de raclage oblique.

6. Dispositif selon l'une des revendications précédentes, **caractérisé en ce qu'**une autre partie de paroi (3b) portant le bloc (1), qui se raccorde à la partie de paroi (3a) comportant les moyens de raclage (4), est susceptible de pivoter autour de charnières.

7. Dispositif selon l'une des revendications précédentes, **caractérisé en ce que** les moyens de raclage (4) sont formés par une bande sans fin, ou par une chaîne sans fin, sur laquelle sont fixés les éléments de raclage (8), lesdits éléments de raclage (8) étant des barrettes présentant de préférence en section transversale une forme en L.

8. Dispositif selon l'une des revendications précédentes, **caractérisé en ce que** la partie de paroi (3a) portant le bloc (1) comprend des moyens destinés à retenir en aval le matériau raclé, comme par exemple une plaque agencée directement au-dessous des éléments de raclage (8).

9. Dispositif selon les revendications 2 et 8, **caractérisé en ce que** les moyens de raclage (4) sont ainsi agencés qu'ils se déplacent juste au-dessus des moyens destinés à retenir en aval le matériau raclé.

10. Dispositif selon l'une des revendications précédentes, **caractérisé en ce que** des moyens d'ameublissement sont prévus dans l'ouverture de sortie (5).

11. Procédé pour ameublir un bloc (1) de matériau comprimé, comme du terreau pour fleurs, dans lequel le bloc (1) est posé par une surface sur une surface d'appui, et l'on enlève du matériau depuis le bloc (1) à l'aide de moyens de raclage (4), **caractérisé en ce que** le bloc (1) est posé sur les moyens de raclage (4) qui se trouvent dans la surface d'appui, et **en ce que** du matériau est raclé à l'aide des moyens de raclage (4) sur cette surface d'appui du bloc (1).

12. Procédé selon la revendication 11, **caractérisé en ce que** le matériau raclé est entraîné par les moyens de raclage (4) le long de la surface jusqu'à un emplacement de distribution.

13. Procédé selon l'une ou l'autre des revendications 11 et 12, **caractérisé en ce que** le bloc (1) est posé en oblique avant d'être raclé.

14. Procédé selon l'une ou l'autre des revendications 11 et 12, **caractérisé en ce que** le bloc (1) posé debout sur une palette (24) est approché, le bloc (1) est posé avec la palette (24) sur une paroi (3b) ouverte ou non de la face d'appui du bloc (1), et la paroi (3b) est basculée, afin de placer le bloc (1) avec une surface latérale (3a) sur une surface (3a) dans laquelle agissent les moyens de raclage (4).

15. Procédé selon la revendication 14, **caractérisé en ce que** la direction de raclage est orientée vers le haut, vers un emplacement de distribution situé en hauteur.
